# EUROPEAN PATENT APPLICATION

(11) **EP 3 522 319 A1**
(43) Date of publication of application: **07.08.2019**
(21) Application number: 19155406.2
(22) Date of filing: 05.02.2019
(51) Int. Cl.: H02G 11/02, B65H 49/28, B65H 57/00, B65H 57/12, B65H 59/12

(54) **AN ELECTRIC CABLE DISPENSER**

(30) Priority: 06.02.2018 FI 20185106
(71) Applicant: Vicera Oy, 37570 Lempäälä (FI)
(72) Inventor: Ahola, Jyri, FI-33880 Lempäälä (FI)
(74) Representative: Koivisto, Harri Kristian

(57) **Abstract**

An electric cable dispenser has a cable guide (14) outside a rotatable horizontal base (10) having a vertical axis of rotation. The cable guide (14) follows the outer perimeter of the electric cable spool for at least 35 arc degrees. The electric cable may be pulled from the horizontal, rotating base (10) to the cable guide (14). The electric cable travels inside the cable guide (14) before it may be pulled from the electric cable dispenser.

## Description

### BACKGROUND

The present invention relates to unwinding filamentary material. More precisely, an electric cable dispenser is disclosed.

Electric cables for building installations may be purchased on a pre-wound spools. Sometimes electric cables are sold in coils wrapped in shrunk plastic film, without a rigid central core. The lack of central core spool may benefit the environment and cost of the cable package, as there is no need to discard the central core spool after dispensing all electric cable.

At the building installation site, the electric cable must be dispensed from the package. Systems for dispensing the electric cable from the plastic coil package are known, but such systems do not function properly with cable spools. The electrician may have to bring along two dispensers for the building installation site, one for cable spools and one for cable coils. All unnecessary material at the building installation, for example at a construction site, may cause safety risks.

The electric cable dispenser must operate with low friction to enable passing the electric cable to cable conduit without problems. The electrician must often operate above the head level while standing on a ladder, therefore reliable cable dispensing further improves the work safety on the construction site. Jammed or tangled cables may also cause further damage to other workers nearby.

Cable dispensing systems according to prior art have utilized a vertical central rod and a rotating platform for keeping the cable spool in place while dispensing the electric cable. When dispensing the electric cable from a coil, using such system, the electric cable may have tangled around the vertical central rod.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

An electric cable dispenser has a cable guide outside a rotatable horizontal base having a vertical axis of rotation. The cable guide follows the outer perimeter of the electric cable spool for at least 35 arc degrees. The electric cable may be pulled from the rotatable horizontal base to the cable guide. The electric cable travels inside the cable guide before it may be pulled from the electric cable dispenser.

The rotatable horizontal base has a central rod extending upwards, at the axis of rotation. When the electric cable is dispensed from a coil, the electric cable travels from the rotatable horizontal base by leaning to the central rod to the vertical cable guide that is configured to bend the electric cable along the perimeter of the horizontal base. The electric cable has a bending radius due to the combination of the inner conductors and the outer insulators. The electric cable, for example a MMJ installation cable used for indoor installations, has a spring-like effect when pulled from the rotatable base, as the bending radius limited by the central rod and the cable guide causes the horizontal base to rotate. The action is frictionless and suitable for coiled electrical cable and spooled electrical cable.

The electrician may have only one electric cable dispenser at the construction site regardless of the cable storage type, thereby reducing the clutter. The electric cable spools remain in place during the installation, and cable coils may be dispensed without additional friction.

Many of the attendant features will be more readily appreciated as they become better understood by reference to the following detailed description considered in connection with the accompanying drawings. The embodiments described below are not limited to implementations which solve any or all the disadvantages of known electric cable dispensers.

### BRIEF DESCRIPTION OF THE DRAWINGS

The present description will be better understood from the following detailed description read in light of the accompanying drawings, wherein
FIG. 1 illustrates schematically one example of an embodiment of an electric cable dispenser;
FIG. 2 illustrates schematically a top view from the example of FIG. 1 with a cable being dispensed;
FIG. 3 illustrates the example of FIG. 1 as an exploded view; and
FIG. 4 illustrates schematically one example of an embodiment of an electric cable dispenser.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same or equivalent functions may be accomplished by different examples.

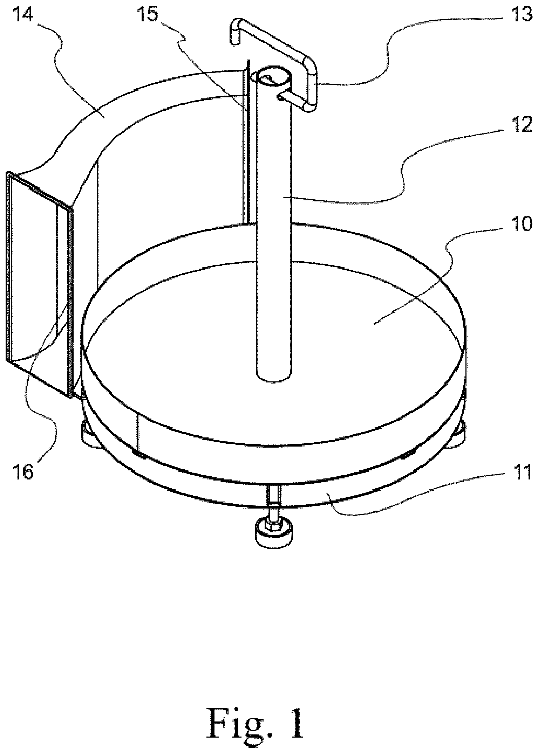

FIG. 1 illustrates one example of an embodiment of an electric cable dispenser. A horizontal base 10 is configured to carry electric cable, either in a spool or in a coil. The horizontal base 10 is in this example illustrated as a round, solid plate having low edges for retaining the coil of electric cable in place. In one embodiment the horizontal base 10 is made of wire, for example as a wire basket configured to retain electric cable. The edges of the horizontal base 10 define a limit for the spool diameter. The horizontal base 10 is rotatable on a frame 11, for example on a bearing, wherein the bearing defines the position of an axis of rotation. The axis of rotation is vertical and substantially in the middle of the horizontal base 10. Decentered axis of rotation may cause vibration or instability to the electric cable dispenser. The frame 11 may comprise adjustable supports for conforming to uneven or tilted surfaces. The electric cable dispenser may be used in tilted positions, but a level operational position is preferred.

The frame 11 supports a central rod 12 that extends through the horizontal base 10, wherein the central rod 12 does not rotate with the horizontal base 10. Alternatively, in one embodiment the central rod 12 is mounted to the horizontal base 10, thereby rotating with the horizontal base 10. The central rod 12 is configured to have an electric cable arranged around it. The central rod 12 is parallel to and centered at the axis of rotation; the axis of rotation is deemed to extend inside the central rod 12. The dimensions of the central rod 12 may be defined according to the electric cable capacity. The length is sufficient to support either the spool of electric cable or the cable coil. The width of the central rod is suitable for fitting into the spool hole. A retaining pin 13 may lock the spool into the central rod 12. The retaining pin is removable or it may be bent parallel to the central rod 12 when installing the spool. The retaining pin 13 may be modified to comprise a handle portion configured for carrying the electric cable dispenser.

A cable guide 14 is positioned outside a cylindrical space defined by the radius of the horizontal base 10 and the central rod 12. The cable guide 14 is mounted to the frame 11, wherein the horizontal base 10 rotates in relation to the cable guide 14. Radius of the cylindrical space is equal to the radius of the horizontal base 10. Height of the cylindrical space is equal to the length of the central rod 12. The cable guide 14 is in one embodiment positioned near the perimeter of the cylindrical space. In one example the distance between the cable guide and the cylindrical space is between 1 ...10 cm. The cable guide 14 is configured to dispense the electric cable by receiving the electric cable from the horizontal base 10. A leading edge 15 of the cable guide 14 is parallel to the central rod 12 at a first position outside the cylindrical space. The electric cable enters the cable guide 14 via the leading edge 15, leaning to the leading edge when the electric cable is being pulled from the electric cable dispenser. The electric cable exits the cable guide 14 from a trailing edge 16, parallel to the central rod 12 at a second position outside the cylindrical space.

The distance between the first position and the second position, or the leading edge 15 and the trailing edge 16, is at least 35 arc degrees from the axis of rotation or the central rod 12. In one embodiment the distance between the first position and the second position, or the leading edge 15 and the trailing edge 16, is at least 60 arc degrees from the axis of rotation or the central rod 12. In one embodiment the distance between the first position and the second position, or the leading edge 15 and the trailing edge 16, is at least 90 arc degrees from the axis of rotation or the central rod 12. The shorter distance between the first position and the second position may lead to increased friction, as the electric cable must be bent into tight curves. The performance may improve up to 90 arc degrees.

The first position and the second position, or the leading edge 15 and the trailing edge 16 are at equal distances from the axis of rotation. In this context the equal distance may have variation of 5...10 cm. Pulling the electric cable from the dispenser causes the electric cable to rotate on the horizontal base 10 and to travel through the cable guide 14 along a chord defined by the first position and the second position, said chord being outside the cylindrical space.

In the exemplary embodiment of FIG. 1, the cable guide 14 comprises a tubular member connecting the leading edge 15 and the trailing edge 16. The tubular member has two openings wherein the leading edge 15 may be defined as one edge of the first opening. The first opening is suitable for receiving the electric cable. The trailing edge 16 may be defined as one edge of the second opening or all edges of the second opening, as the direction where the electric cable is dispensed may vary. In the illustrated example the second opening comprises a horn-like shape to reduce friction when the cable is pulled to various directions. In this example the trailing edge may be on the inside surface of the horn-like shape. In one embodiment the leading edge 15 comprises an oblong opening to the tubular member. In one embodiment the trailing edge 16 comprises an oblong opening to the tubular member. The lower edge of the first opening having the leading edge may be positioned to the same level or to slightly lower than the low edges of the round plate of the horizontal base 10.

In one embodiment the cable guide 14 having the tubular member comprises a curved section along the perimeter of the cylindrical space. The inner side wall may be regarded as a guiding edge or surface causing to bend the electric cable. The chord may be defined via the guiding edge or surface. The inner side wall facing the central rod 12 of the curved section may be concave, following the shape of a full electric cable spool. The distance between the full electric cable spool measured to the maximum capacity of the electric cable dispenser may be between 1 cm and 10 cm.

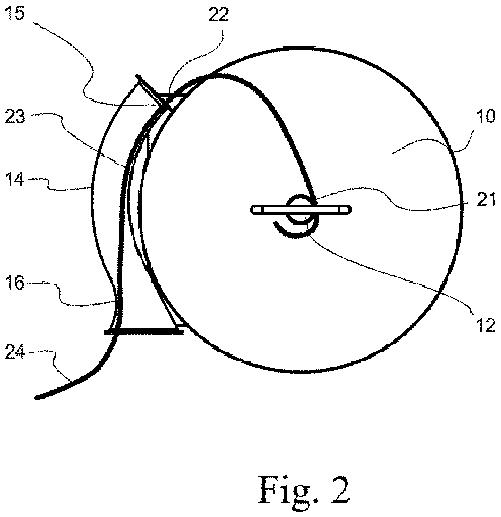

FIG. 2 illustrates the example of FIG. 1 from the top, showing in a simplified form the dispensing stage of the electric cable stored in the coil, without the central spool. When the coil of electric cable is being dispensed, the electric cable leans to the central rod 12 at a position 21. The cable guide 14 bends the electric cable, position 22, to tangential direction of the horizontal base 10 and the coil of cable being dispensed. The outer side wall of the tubular member causes the electric cable to bend inside the cable guide 14, position 23, wherein the bending radius of the electric cable pushes the cable to the tangential direction of the horizontal base 10. As the electric cable is pulled from the cable guide, position 24, the electric cable leans to the trailing edge inside the horn-like shape of the second opening.

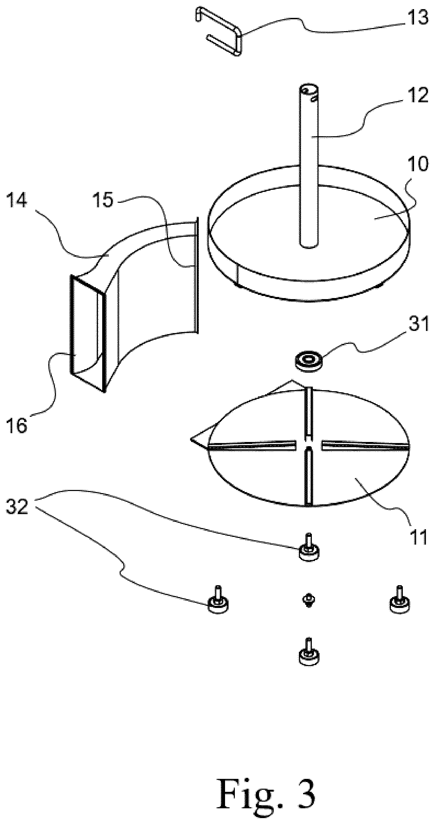

FIG. 3 illustrates the example of FIG. 1 as an exploded view. The frame 11 comprises adjustable supports 32, wherein they may be adjusted by threaded connection to the frame 11. The bearing 31 between the frame 11 and the horizontal base 10 enables the rotation of the rotatable horizontal base 10. The frame 11 comprises mounting ears for the tubular cable guide 14.

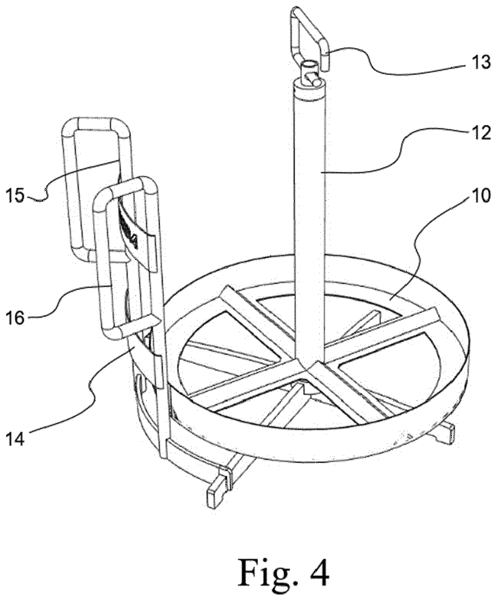

FIG. 4 illustrates one example of an embodiment of the electric cable dispenser. The cable guide 14 comprises a first wire guide 41 at the leading edge 15 and a second wire guide 42 at the trailing edge 16. In this example the horizontal base 10 comprises horizontal bars 43 configured to support the cable coil or the cable spool. In one embodiment the cable guide 14 comprises a third wire guide having a guiding edge between the leading edge 15 and the trailing edge 16.

An electric cable dispenser is disclosed, comprising a frame; a horizontal base rotatable on the frame, around a vertical axis of rotation in the middle of the horizontal base; a central rod extending upwards from the middle of the horizontal base, at the vertical axis of rotation, configured to have an electric cable arranged around the central rod; and a cable guide positioned outside a cylindrical space defined by the radius of the horizontal base and the central rod, wherein the cable guide is configured to dispense the electric cable by receiving the electric cable from the horizontal base. The cable guide comprises a leading edge parallel to the central rod at a first position outside the cylindrical space; and a trailing edge parallel to the central rod at a second position outside the cylindrical space. The distance between the first position and the second position is at least 35 arc degrees from the axis of rotation. The first position and the second position are at equal distances from the axis of rotation. Pulling the electric cable from the dispenser causes the electric cable to rotate on the horizontal base and to travel through the cable guide along a chord defined by the first position and the second position, said chord being outside the cylindrical space. In one embodiment the cable guide comprises a tubular member connecting the leading edge and the trailing edge. In one embodiment the leading edge comprises an oblong opening to the tubular member. In one embodiment the trailing edge comprises an oblong opening to the tubular member. In one embodiment the tubular member comprises a curved section along the perimeter of the cylindrical space. In one embodiment the cable guide comprises a first wire guide at the leading edge and a second wire guide at the trailing edge. In one embodiment the cable guide comprises a guiding edge between the leading edge and the trailing edge. In one embodiment the cable guide comprises a third wire guide at the guiding edge. In one embodiment the electric cable dispenser is configured to dispense the electric cable from a coil and from a spool.

Any range or device value given herein may be extended or altered without losing the effect sought.

Although at least portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. An electric cable dispenser, comprising:
a frame (11);
a horizontal base (10) rotatable on the frame (11), around a vertical axis of rotation in the middle of the horizontal base (10);
a central rod (12) extending upwards from the middle of the horizontal base (10), at the vertical axis of rotation, configured to have an electric cable arranged around the central rod (12); and
a cable guide (14) positioned outside a cylindrical space defined by the radius of the horizontal base (10) and the central rod (12), wherein the cable guide (14) is configured to dispense the electric cable by receiving the electric cable from the horizontal base (10);
**characterized in that** the cable guide (14) comprises:
a leading edge (15) parallel to the central rod (12) at a first position outside the cylindrical space; and
a trailing edge (16) parallel to the central rod (12) at a second position outside the cylindrical space;
the distance between the first position and the second position being at least 35 arc degrees from the axis of rotation;
the first position and the second position being at equal distances from the axis of rotation;
wherein pulling the electric cable from the dispenser causes the electric cable to rotate on the horizontal base (10) and to travel through the cable guide (14) along a chord defined by the first position and the second position, said chord being outside the cylindrical space.

2. An electric cable dispenser according to claim 1, **characterized in that** the cable guide (14) comprises a tubular member connecting the leading edge (15) and the trailing edge (16).

3. An electric cable dispenser according to claim 2, **characterized in that** the leading edge (15) comprises an oblong opening to the tubular member.

4. An electric cable dispenser according to claim 2, **characterized in that** the trailing edge (16) comprises an oblong opening to the tubular member.

5. An electric cable dispenser according to any of the claims 1 to 4, **characterized in that** the tubular member comprises a curved section along the perimeter of the cylindrical space.

6. An electric cable dispenser according to claim 1, **characterized in that** the cable guide (14) comprises a first wire guide (41) at the leading edge (15) and a second wire guide (42) at the trailing edge (16).

7. An electric cable dispenser according to any of the claims 1 to 6, **characterized in that** the cable guide (14) comprises a guiding edge between the leading edge (15) and the trailing edge (16).

8. An electric cable dispenser according to claim 7, **characterized in that** the cable guide (14) comprises a third wire guide at the guiding edge.

9. An electric cable dispenser according to any of the claims 1 to 8, **characterized by** being configured to dispense the electric cable from a coil and from a spool.
